# FASCICULE DE BREVET EUROPEEN

(11) **EP 2 213 858 B1**
(45) Date de publication et mention de la délivrance du brevet: **13.02.2013**
(21) Numéro de dépôt: 09180730.5
(22) Date de dépôt: 24.12.2009
(51) Int. Cl.: F01P 11/02, B60S 1/48

(54) **Dispositif de rechauffage du liquide de lave-glace d'un vehicule automobile**
Vorrichtung zum Wiederaufwärmen der Scheibenwischflüssigkeit eines Kraftfahrzeugs
Device for heating the windscreen-washer liquid of an automobile

(30) Priorité: 30.01.2009 FR 0950578
(43) Date de publication de la demande: 04.08.2010
(73) Titulaire: Peugeot Citroën Automobiles SA, 78140 Vélizy-Villacoublay (FR)
(72) Inventeur: Pichlak, Frédéric, 94320, Thiais (FR); Caqueret, Nicolas, 91160, Saulx lesChartreux (FR)

(56) Documents cités:
- EP-A- 1 642 792
- DE-A1- 3 704 325
- DE-A1- 3 825 330
- DE-U1- 20 218 178
- FR-A- 2 875 763
- FR-A- 2 899 186

## Description

L'invention concerne les dispositifs de réchauffage du liquide de lave-glace des véhicules automobiles.

Dans les véhicules automobiles, les installations de lave-glace coopèrent avec les équipements de balayage des surfaces vitrées pour nettoyer le pare-brise et, le cas échéant, la lunette arrière et les projecteurs du véhicule. Ils comprennent, de manière connue, au moins un réservoir et au moins un gicleur pour projeter sur la surface à nettoyer le liquide maintenu sous pression par une pompe.

Il va de soi que l'efficacité du nettoyage est clairement améliorée lorsque le liquide du lave-glace est porté à une température élevée avant sa projection. L'eau chaude permet, en effet, de mieux décoller et éliminer les diverses souillures déposées sur la surface. Le réchauffage du liquide lave-glace permet également de faciliter le dégivrage des glaces par temps froid.

On a donc déjà proposé divers systèmes pour réaliser ce réchauffage. Certains de ces systèmes font appel à une source spécifique de chaleur, comme, par exemple, une résistance électrique.

DE 37 04 325 A1 décrit un dispositif de réchauffage du liquide de lave-glace selon le préambule de la revendication 1.

D'autres font appel à une source de chaleur existante dans le véhicule et agissent par échange thermique entre cette source et, soit le réservoir, soit le conduit branché entre celui-ci et le gicleur.

C'est ainsi que l'on a déjà proposé, notamment dans le document FR2875763, au nom de la demanderesse, de réaliser cet échange thermique entre le réservoir de lave-glace et le boîtier de dégazage du circuit de refroidissement du moteur du véhicule.

Dans le mode de réalisation proposé par ce document, le réservoir de lave-glace entoure au moins partiellement le boîtier de dégazage. Si cette solution est efficace, elle est pénalisante au point de vue du choix de l'emplacement du réservoir et de sa forme, de sorte qu'il est difficile de l'implanter dans le compartiment moteur de certains véhicules.

Le but de l'invention est donc de proposer un dispositif conservant les avantages du dispositif antérieur, c'est-à-dire prélevant les calories nécessaires au réchauffement du liquide lave-glace à partir du boîtier de dégazage, mais laissant un large choix dans l'implantation du réservoir contenant ledit liquide.

A cet effet, la présente invention a pour objet un dispositif de réchauffage du liquide de lave-glace d'un véhicule automobile contenu dans un circuit composé d'un réservoir, d'une pompe prélevant le liquide dans celui-ci et le délivrant sous pression à un système de projection dudit liquide sur la vitre à nettoyer à travers un conduit, ledit dispositif étant associé à un boîtier de dégazage faisant partie du circuit de refroidissement du moteur du véhicule.

Selon l'invention, la paroi de la partie chaude de ce boîtier de dégazage est revêtue, au moins en partie, d'une seconde paroi extérieure délimitant un volume interne raccordé, d'une part à la section de conduit relié à la sortie de la pompe du circuit de lave-glace et d'autre part, à la section de conduit relié au système de projection de liquide dudit circuit.

Selon d'autres caractéristiques avantageuses de l'invention :
- Le volume interne formé entre la paroi du boîtier de dégazage et la paroi de revêtement extérieure est d'épaisseur faible et constante afin que le liquide qui le traverse forme une lame.
- Avantageusement, l'épaisseur du volume interne est de l'ordre de. 2 à 4 mm.
- La paroi extérieure est venue de forme avec la paroi du boîtier de dégazage.
- En variante, la paroi extérieure est rapportée et fixée sur la paroi du boîtier.
- Selon un mode de réalisation, la paroi extérieure délimitant le volume interne est en forme de coque adaptée à la forme sphérique de la paroi du boîtier de dégazage.
- L'embout de sortie du liquide lave-glace raccordé à la section de conduit relié au système de projection de liquide lave-glace comporte un dispositif permettant d'évacuer les bulles gazeuses éventuellement formées lors du réchauffement dudit liquide.

D'autres caractéristiques et avantages de l'invention apparaîtront clairement à la lecture de la description ci-après, donnée à titre indicatif en référence aux dessins annexés dans lesquels :
- La figure 1 est une vue en perspective du dispositif selon l'invention et,
- La figure 2 est une vue en coupe transversale du dispositif de la figure 1.

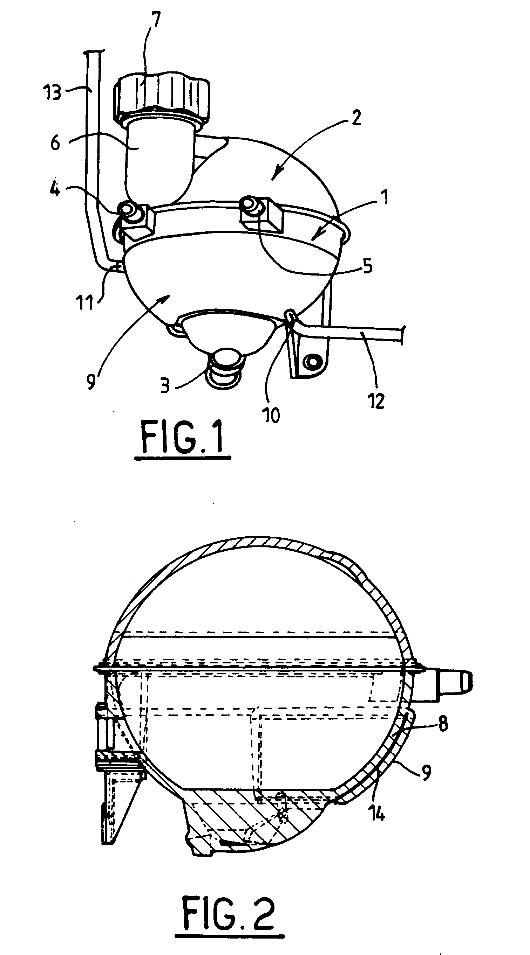

Sur la figure 1 , on a représenté un boîtier de dégazage, de type connu, faisant partie du circuit de refroidissement d'un moteur de véhicule automobile. Le rôle de ce boîtier consiste à séparer le liquide du circuit de refroidissement, qui circule dans la partie hémisphérique inférieure 1 , de sa vapeur ainsi que des gaz éventuellement introduits dans le circuit. Cette phase gazeuse est reçue en partie haute du boîtier, dans la calotte sphérique 2.

Le boîtier comporte différents piquages 3, 4 et 5 pour la circulation du liquide et une soupape d'évacuation des gaz (non représentée) ainsi qu'un goulot 6, fermé par un bouchon 7, permettant le remplissage du circuit de refroidissement avec le liquide approprié.

Le liquide circule à l'intérieur de la partie inférieure 1 à une température relativement constante, par exemple aux alentours de 60°. La paroi 8 de cette partie est donc maintenue en permanence à une température élevée.

Selon l'invention, cette partie hémisphérique inférieure est revêtue, au moins en partie, d'une seconde paroi 9 en forme de coque qui délimite, avec la paroi 8, un volume interne.

La coque 9 est munie en partie basse d'un premier embout 10 et, en partie haute et à l'opposé du premier, d'un second embout 11.

Le liquide du lave-glace extrait du réservoir par une pompe (non représentés) arrive froid et sous pression par un conduit 12 jusqu'à l'embout 11. Il circule alors entre la coque 9 et la paroi 8 du boîtier où il est réchauffé par contact avec cette dernière. Il ressort donc chaud de l'embout 12 pour être amené ainsi, par un conduit 13, au système de projection de liquide.

On aura compris que le dispositif de réchauffage étant placé en aval du réservoir, le liquide ne séjourne pas dans la coque et y circule uniquement lorsque la commande de lave-glace est actionnée.

Pour obtenir un réchauffement efficace, il est donc nécessaire que la montée en température soit très rapide.

Pour parvenir à ce résultat, le volume interne 14 formé entre la paroi 8 du boîtier et la paroi 9 de la coque est d'épaisseur faible et constante, cette épaisseur est, par exemple, de l'ordre de 2 à 4 mm. De cette manière, le liquide circule dans la coque sous la forme d'une fine lame 14. En outre, la surface de la coque est choisie la plus grande possible compatible avec la forme et les équipements extérieurs du boîtier.

La faible épaisseur de la lame et l'importante surface d'échange avec la paroi du boîtier permettent donc une rapide montée en température du liquide.

Le bon fonctionnement du boîtier de dégazage exige en outre que la température du liquide de refroidissement ne subisse pas de fluctuations trop importantes.

La faible quantité de liquide de lavage contenu dans la lame ainsi que l'intermittence des échanges thermiques entraînés par sa présence (la récurrence des mises en service du lave-glace est faible) ne perturbe donc pas l'équilibre thermique du circuit de refroidissement du moteur.

En agissant sur la surface de la coque 9 ainsi que sur l'épaisseur de la lame 14, il est donc possible d'optimiser les échanges thermiques entre les deux liquides en présence.

La coque 9 est soit venue de forme avec la paroi du boîtier, soit rapportée et fixée sur celle-ci par collage, soudage, vissage, rivetage ou tout autre moyen approprié en fonction des matériaux de l'une et de l'autre.

Avantageusement, l'embout 11 de sortie du liquide lave-glace comporte un dispositif permettant d'évacuer les bulles gazeuses éventuellement formées lors du réchauffement dudit liquide.

Le dispositif que l'on vient de décrire permet ainsi de réchauffer efficacement le liquide de lavage fournit aux différents systèmes de lave-glace tout en imposant aucune contrainte quant au choix de la forme et de l'emplacement, tant du réservoir de liquide de lave-glace que du boîtier de dégazage.

Bien entendu, l'invention n'est pas limitée au mode de réalisation que l'on vient de décrire. C'est ainsi, par exemple, que la forme du boîtier de dégazage peut ne pas être sphérique mais de tout autre conformation appropriée, la paroi délimitant le volume de liquide s'ajustant alors à ladite forme.

## Revendications

1. Dispositif de réchauffage du liquide de lave-glace d'un véhicule automobile contenu dans un circuit composé d'un réservoir, d'une pompe prélevant le liquide dans celui-ci et le délivrant sous pression à un système de projection dudit liquide sur la vitre à nettoyer à travers un conduit (12, 13), ledit dispositif étant associé à un boîtier de dégazage faisant partie du circuit de refroidissement du moteur du véhicule, **caractérisé en ce que** la paroi (8) de la partie chaude (1) du boîtier est revêtue, au moins en partie, d'une seconde paroi extérieure (9) délimitant un volume interne raccordé, d'une part au conduit (12) relié à la sortie de la pompe du circuit de lave-glace et d'autre part, au conduit (13) relié au système de projection de liquide dudit circuit.

2. Dispositif de réchauffage du liquide de lave-glace selon la revendication 1,
**caractérisé en ce que** le volume interne (14) formé entre la paroi (8) du boîtier et la paroi extérieure (9) est d'épaisseur faible et constante afin que le liquide qui le traverse forme une lame.

3. Dispositif de réchauffage du liquide de lave-glace selon la revendication 2,
**caractérisé en ce que** l'épaisseur du volume interne (14) est de l'ordre de 2 à 4 mm.

4. Dispositif de réchauffage du liquide de lave-glace selon l'une des revendications précédentes,
**caractérisé en ce que** la paroi extérieure (9) est venue de forme avec la paroi (8) du boîtier.

5. Dispositif de réchauffage du liquide de lave-glace selon l'une des revendications 1 à 3,
**caractérisé en ce que** la paroi extérieure (9) est rapportée et fixée sur la paroi (8) du boîtier.

6. Dispositif de réchauffage du liquide de lave-glace selon l'une des revendications précédentes,
**caractérisé en ce que** la paroi extérieure (9) délimitant le volume interne (14) est en forme de coque adaptée à la forme sphérique de la paroi (8) du boîtier de dégazage.

7. Dispositif de réchauffage du liquide de lave-glace selon l'une des revendications précédentes,
**caractérisé en ce que** l'embout (11) de sortie du liquide lave-glace raccordé au conduit (13) relié au système de projection de liquide comporte un dispositif permettant d'évacuer les bulles gazeuses éventuellement formées lors du réchauffement dudit liquide.

## Claims

1. Device for heating windscreen wash liquid for a motor vehicle contained in a circuit composed of a reservoir and a pump taking off liquid therefrom and delivering it under pressure to a system for spraying said liquid onto the screen to be cleaned through a pipe (12, 13), said device being associated with a degassing box forming part of the cooling circuit of the vehicle engine, **characterised in that** the wall (8) of the hot part (1) of the box is at least partly clad with a second external wall (9) delimiting an internal space coupled firstly to the pipe (12) connected to the output of the pump of the windscreen washer circuit and secondly to the pipe (13) connected to the liquid-spray system of said circuit.

2. Device for heating windscreen wash liquid according to claim 1, **characterised in that** the internal space (14) formed between the wall (8) of the box and the external wall (9) is of a constant small thickness so that the liquid passing through it forms a sheet.

3. Device for heating windscreen wash liquid according to claim 2, **characterised in that** the thickness of the internal space (14) is around 2 to 4 mm.

4. Device for heating windscreen wash liquid according to one of the preceding claims, **characterised in that** the external wall (9) is made in one piece with the wall (8) of the box.

5. Device for heating windscreen wash liquid according to one of claims 1 to 3, **characterised in that** the external wall (9) is attached and fixed to the wall (8) of the box.

6. Device for heating windscreen wash liquid according to one of the preceding claims, **characterised in that** the external wall (9) delimiting the internal space (14) is in the form of a shell adapted to the spherical form of the wall (8) of the degassing box.

7. Device for heating windscreen wash liquid according to one of the preceding claims, **characterised in that** the connecting piece (11) for discharge of the windscreen wash liquid coupled to the pipe (13) connected to the liquid-spray system comprises a device for discharging any gas bubbles formed when said liquid is heated.

## Patentansprüche

1. Vorrichtung zum Erhitzen der Scheibenreinigungsflüssigkeit eines Kraftfahrzeugs in einem Kreislauf, umfassend einen Tank, eine Pumpe, die die Flüssigkeit in diesem ansaugt und sie unter Druck an ein System zum Ausspritzen der Flüssigkeit auf die zu reinigende Scheibe durch eine Leitung (12, 13) abgibt, wobei die Vorrichtung mit einem Entgasungsgehäuse verbunden ist, das Bestandteil des Kühlkreislaufs des Fahrzeugmotors ist, **dadurch gekennzeichnet, dass** die Wand (8) des heißen Teils (1) des Gehäuses wenigstens teilweise mit einer zweiten Außenwand (9) verkleidet ist, die ein Innenvolumen begrenzt, das einerseits an die Leitung (12), die mit dem Ausgang der Pumpe des Scheibenreinigerkreislaufs verbunden ist, und andererseits an die Leitung (13), die mit dem System zum Ausspritzen der Flüssigkeit des Kreislaufs verbunden ist, angeschlossen ist.

2. Vorrichtung zum Erhitzen der Scheibenreinigungsflüssigkeit nach Anspruch 1, **dadurch gekennzeichnet, dass** das Innenvolumen (14), das zwischen der Wand (8) des Gehäuses und der Außenwand (9) gebildet wird, von geringer Dicke und konstant ist, damit die Flüssigkeit, die es durchströmt, eine Woge bildet.

3. Vorrichtung zum Erhitzen der Scheibenreinigungsflüssigkeit nach Anspruch 2, **dadurch gekennzeichnet, dass** die Dicke des Innenvolumens (14) bei 2 bis 4 mm liegt.

4. Vorrichtung zum Erhitzen der Scheibenreinigungsflüssigkeit nach einem der vorhergehenden Ansprüche, **dadurch gekennzeichnet, dass** sich die Außenwand (9) an die Form der Wand (8) des Gehäuses anlegt.

5. Vorrichtung zum Erhitzen der Scheibenreinigungsflüssigkeit nach einem der Ansprüche 1 bis 3, **dadurch gekennzeichnet, dass** die Außenwand (9) an die Wand (8) des Gehäuses angefügt und darauf fixiert ist.

6. Vorrichtung zum Erhitzen der Scheibenreinigungsflüssigkeit nach einem der vorhergehenden Ansprüche, **dadurch gekennzeichnet, dass** die Außenwand (9), die das Innenvolumen (14) begrenzt, die Form einer Schale aufweist, die an die Kugelform der Wand (8) des Entgasungsgehäuses angepasst ist.

7. Vorrichtung zum Erhitzen der Scheibenreinigungsflüssigkeit nach einem der vorhergehenden Ansprüche, **dadurch gekennzeichnet, dass** der Austrittsstutzen (11) der Scheibenreinigungsflüssigkeit, der an die Leitung (13) angeschlossen ist, die mit dem System zum Ausspritzen der Flüssigkeit verbunden ist, eine Vorrichtung umfasst, die es ermöglicht, die Gasblasen abzulassen, die sich beim Erhitzen der Flüssigkeit eventuell bilden.
